**Europäisches Patentamt**

**European Patent Office**

**Office européen des brevets**

(19)

(11) Veröffentlichungsnummer: **0 039 924**
**B1**

(12) # EUROPÄISCHE PATENTSCHRIFT

(45) Veröffentlichungstag der Patentschrift:
**25.09.85**

(21) Anmeldenummer: **81103520.3**

(22) Anmeldetag: **08.05.81**

(51) Int. Cl.⁴: **B 01 F 9/20,** A 61 C 13/00,
B 01 F 7/30, A 61 C 9/00

(54) **Gerät zum Knetmischen plastischer Massen.**

(30) Priorität: 09.05.80 **DE 3017783**
18.11.80 **DE 3043463**

(43) Veröffentlichungstag der Anmeldung:
**18.11.81 Patentblatt 81/46**

(45) Bekanntmachung des Hinweises auf die Patenterteilung:
**25.09.85 Patentblatt 85/39**

(84) Benannte Vertragsstaaten:
**AT BE FR GB IT LU NL**

(56) Entgegenhaltungen:
**DE - C - 395 543**
**FR - A - 1 100 019**
**GB - A - 301 242**
**US - A - 2 683 593**
**US - A - 2 808 239**

(73) Patentinhaber: **Smit, Michael, Komturweg 2a,**
**D-7750 Konstanz (DE)**

(72) Erfinder: **Smit, Michael, Komturweg 2a, D-7750 Konstanz**
**(DE)**

(74) Vertreter: **Riebling, Günter, Dr. et al, Patentanwälte**
**Dr.-Ing., Dipl.-Ing., Ing.(grad) Günter Riebling Dr.-Ing.,**
**Dipl.-Ing. Peter Riebling Rennerle 10 Postfach 3160,**
**D-8990 Lindau (Bodensee) (DE)**

## Beschreibung

Die Erfindung betrifft ein Gerät zum Knet-Mischen plastischer Masse mit einem die Masse aufnehmenden, drehbar angeordneten Becher und einem in den Becher ein- und ausfahrbaren Mischwerkzeug mit einer angetriebenen Mischwalze, die in der Betriebsstellung im Becher exzentrisch angeordnet ist und die unter Ausbildung eines Quetschspalts einen geringen Abstand von einer Behälterwand einnimmt, ferner mit feststehenden Abstreifmessern, die in einem Abstand vom Quetschspalt angeordnet sind.

Ein solches Gerät beschreibt die US-A-2 808 239. In dem Quetschspalt wird die plastische Masse geknetet und bleibt in einer mehr oder weniger dünnen Schicht an der Innenwand des Bechers haften, bis sie zu dem gegenüber dem sich drehenden Becher feststehenden Abstreifmesser gelangt, der diese Schicht abstreift, die dann zu Boden fällt und anschliessend wieder in den Quetschspalt gelangt, und so fort.

Mit diesem bekannten Gerät lässt sich zwar die plastische Masse kneten und mischen, jedoch ist insbesondere der Mischvorgang für viele Einsatzzwecke noch nicht ausreichend intensiv, bzw. benötigt eine verhältnismässig lange Zeit. Dies beruht dort insbesondere darauf, dass die im Quetschspalt ausgebildete Schicht als solche zu Boden fällt, so dass das Material der Schicht insich nur wenig beim weiteren Verlauf gemischt wird.

Der Erfindung liegt daher die Aufgabe zugrunde, insbesondere die Mischwirkung dieses bekannten Gerätes weiter zu verbessern.

Zur Lösung dieser Aufgabe ist die Erfindung dadurch gekennzeichnet, dass an dem Abstreifmesser mindestens ein zur Becherachse hin zeigender Schneidstift angebracht ist, der die sich ablösende Knetmasse in Streifen aufteilt.

Die hierdurch gebildeten Streifen fallen also getrennt auf den Boden des Bechers, so dass, dadurch bedingt, die plastische Masse intensiver gemischt wieder zum Quetschspalt gelangt und dort geknetet wird.

Die Unteransprüche sind auf bevorzugte Ausgestaltungen der Erfindung gerichtet.

Die Erfindung wird im folgenden anhand von Ausführungsbeispielen näher erläutert. Es zeigt:

Figur 1 eine Vorderansicht und

Figur 2 eine Draufsicht des Geräts,

Figur 3 einen Vertikalschnitt nach der Linie A–B durch den in Arbeit stehenden Becher nach Figur 5,

Figur 4 einen Schnitt nach der Linie C–D in Figur 5,

Figur 5 eine Draufsicht auf bzw. in den in Arbeitsstellung befindlichen Becher,

Figur 6 einen Vertikalschnitt durch einen Zusatzbecher entsprechend der Linie A–B und

Figur 7 die Ansicht des Bechers von unten,

Figur 8 zeigt die andere Ausführungsform für das Mischen von Korrekturmassen,

Figur 9 ein Zusatz-Mischwerkzeug für die Ausführung gemäss der Figur 8.

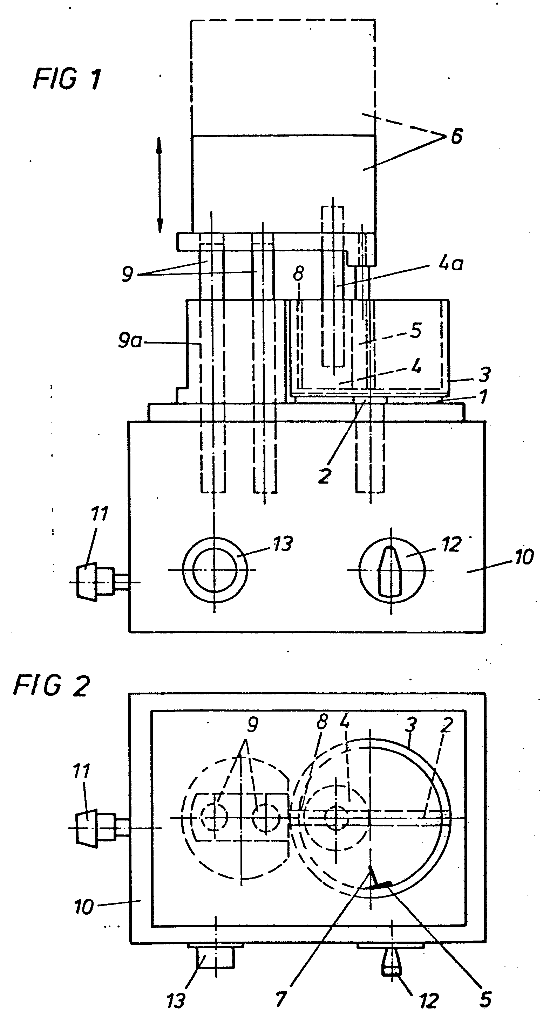

Die Figuren 1 und 2 stellen das gesamte Gerät dar, bei dem auf dem motorisch betriebenen Drehteller 1 mit oberseitig angeordnetem Mitnehmer 2 der das Mischgut enthaltende Becher 3 lose so aufgesetzt ist, dass der Mitnehmer 2 in die Becherunterfläche eingreift. Der Becher 3 ist mit zylindrischer Seitenwand 14 versehen und in seinen zylindrischen Innenraum ragt die Knetvorrichtung hinein. Diese besteht aus einer Mischwalze 4, die zylindrisch geformt ist und deren Achse 4a parallel zu der des Bechers 3 verläuft. Ihr Durchmesser ist so bemessen, dass in Arbeitsstellung ein gleichförmiger, schmaler Quetschspalt 8 verbleibt.

Zusammen mit einem an der Innenfläche des Bechers 3 anliegenden Abstreifmesser 5 ist die Mischwalze 4 in einem Mischkopf 6 gelagert, der über Teleskopstäbe 9 verschiebbar so auf die Halterung 10 des Drehtellers 1 aufgesetzt ist, dass er von einer Feder in seine obere Ruhestellung gedrückt wird, in welcher sich die Mischwalze 4 und das Abstreifmesser 5 ausserhalb des Bechers 3 befinden (vgl. Bewegungspfeile und gestrichelte Andeutung in Fig. 1). Die Teleskopstäbe 9 sind zweckmässigerweise in einem starr auf die Halterung 10 aufgesetzten Führungsklotz 9a geführt, der auch die Federung enthält. In der Halterung 10 ist eine nicht näher dargestellte Klinke gelagert, in welche z.B. einer der Teleskopstäbe 9 einrastet, sobald der Mischkopf 6 gegen den Federdruck nach unten in seine untere Arbeitsstellung gedrückt wird. Ein von aussen bedienbarer Auslösekopf 11 löst die Klinke wieder und gibt so den Mischkopf 6 wieder frei, der dann infolge des Federdrucks nach oben in seine obere Ruhestellung fährt.

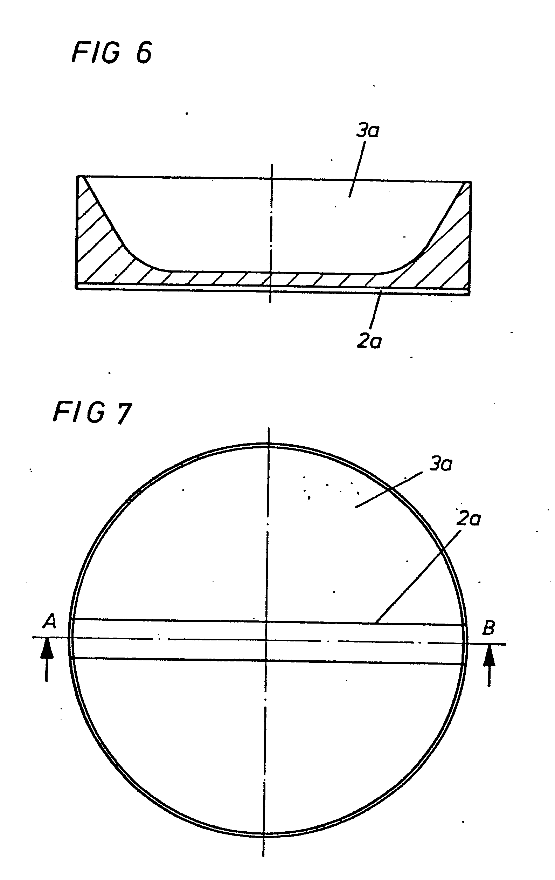

Zum Betrieb wird die zu mischende Menge des Materials bzw. der Komponenten in den Becher 3 eingelegt und dieser auf den Drehteller 1 so aufgesetzt, dass der Mitnehmer 2 in Eingriff steht. Nach dem Einschalten des Drehteller- und des Mischwalzenantriebs (letzterer ist zweckmässigerweise im Mischkopf 6 untergebracht) setzen sich der Becher 3 und die Mischwalze 4 gleichsinnig in Drehung, wie z.B. in Figur 5 durch Pfeile angedeutet. Das lose im Becher 3 liegende Material wird dabei in den Quetschspalt 8 eingedrückt und zu einem Band breitgewalzt. Dieses an der seitlichen Innenwandung des Bechers 3 anhaftende Band wird dann vom Abstreifmesser 5 abgeschält, so dass es sich ins Becherinnere stülpt.

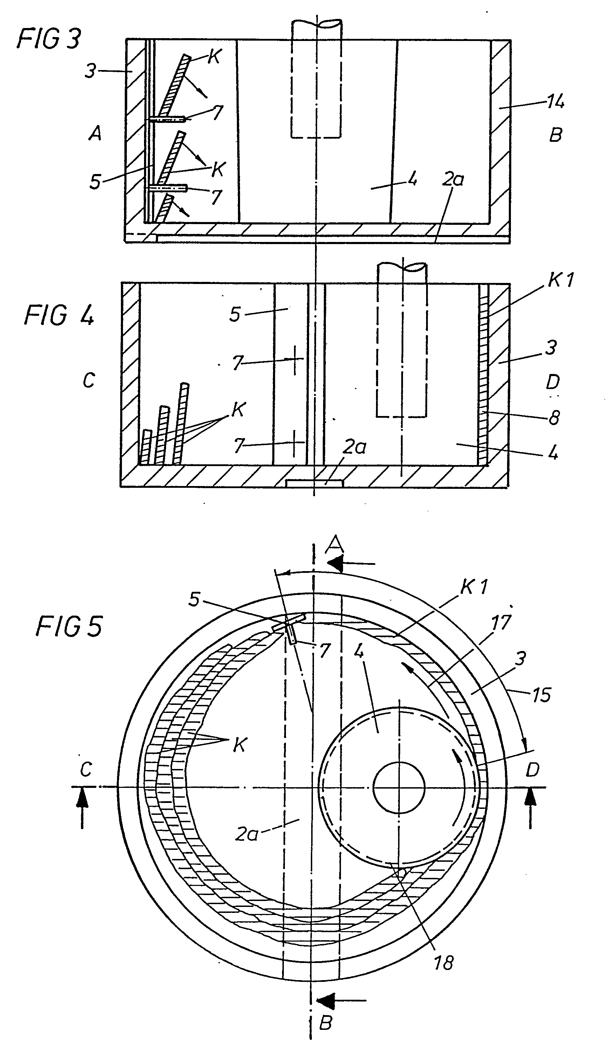

Von erfindungswesentlichem Vorteil ist es, dass am Abstreifmesser 5 mindestens einer, besser noch zwei oder drei Schneidstifte 7 starr verankert sind, die zur Becherachse hin zeigen und die das von der inneren Becherwand abgeschälte Knetmaterialband in mehrere Streifen K der Länge nach auftrennen, die – wie es in Fig. 3 gezeigt ist – einzeln nach unten klappen und dann nebeneinander auf den Becherboden kommen, wie es die Fig. 4 und 5 zeigen. Hiernach werden diese nebeneinanderliegenden Streifen K von der Walze 4 wieder in den Quetschspalt 8 gepresst, wodurch eine intensive und gleichmässig innige Durchmischung der einzelnen Materialien erfolgt. Wie die praktische Erprobung gezeigt hat, werden all Arten Materialien – auch schwierige schmierende und nicht schmierende Materialien – ohne deren Aufpeitschen und ohne Druckpulsation schonend gemischt und zu einer weitestgehend homogenen Masse geknetet.

Das Gerät kann über einen Zeitschalter 12 über eine vorgewählte Zeitdauer betrieben werden und ein Elektronikschalter, z.B. auch ein Potentiometer, kann die Drehgeschwindigkeit des Drehtellers 1 und/oder der Mischwalze 4 in weitem Bereich regeln. Solche Elektronikschalter 23 sind zweckmässigerweise in die Halterung 10 eingebaut und bestehen aus allgemein schon aus anderen Gebieten der Technik her bekannten Bauteilen.

Vorteilhaft ist schliesslich, wenn dem Drehteller 1 neben dem vorbeschriebenen Becher 3 ein oder mehrere Zusatzbecher 3a gemäss z.B. Fig. 6 zugeordnet werden, die alle den gleichen Mitnehmereingriff 2a aufweisen. Diese Zusatzbecher 3a können kleiner und als flache Schale ausgebildet sein, was ein Durchmischen kleinster Materialmengen mit dem Handspachtel ermöglicht, wobei der Drehteller (und damit der Zusatzbecher) in maschinelle Drehung versetzt, der Mischkopf 6 samt Mischwalze 4 und Abstreifmesser 5 aber in hochgehobener Ruhestellung verbleibt.

Figur 5 zeigt, dass sich an der Innenwand der Behälterwandung 14 eine Knetmasse K1 ausbildet, die dann vom Abstreifmesser 5 mit seinen Schneidstiften 7 in die Streifen K verteilt wird.

Zwischen dem Quetschspalt 8 und dem Abstreifmesser 5 mit seinen Schneidstiften 7 befindet sich ein Winkelabstand 15. Der Becher 3 dreht sich in Richtung des Pfeiles 17.

Die Erfindung hat den Vorteil, dass sie für die Knetmischung auch sehr schwieriger Medien, vor allem in der Dentalindustrie, aber auch in vielen anderen Sektoren, wie z.B. Chemische Industrie, Papier-, Farben- und Lack-Industrie, Medizintechnik u.a. m. eingesetzt werden kann. Von bemerkenswertem Vorteil ist, dass das erfindungsgemässe Gerät keine Stopfbüchse, sondern nur Behälter mit geschlossenem Boden aufweist und dass es auch einen längeren Trockenlauf verträgt, ohne Schaden zu nehmen oder zu verursachen.

Bei der Ausführung insbesondere für das Mischen von Korrekturmassen in der zahnärztlichen Verwendung besteht die Erfindung darin, dass exzentrisch im Becher in geringem Abstand von der Behälterwandung eine angetriebene, auswechselbare Mischwalze angeordnet ist, und im Abstand vom Quetschspalt der Mischwalze feststehende Abstreif-Messer mit Schneidstiften angeordnet sind.

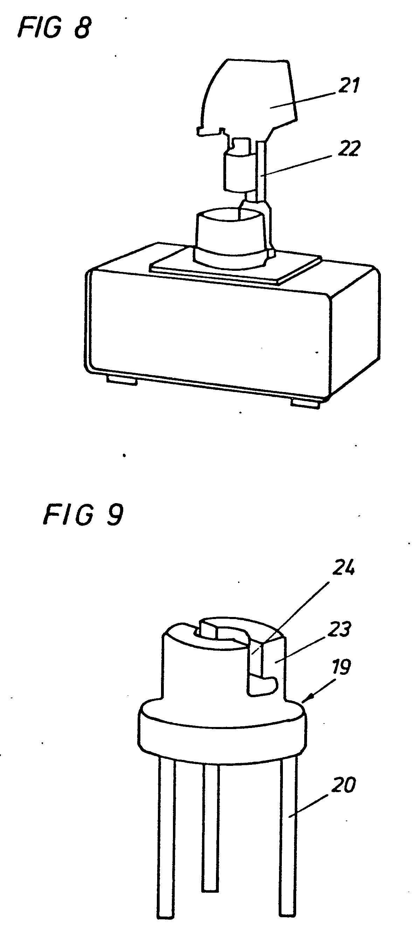

Das Zusatzmischwerkzeug nach Fig. 8 und 9 dient zum Mischen von Korrekturmassen. Diese Korrekturmassen werden in den Erstabdruck eingegeben, um Ungenauigkeiten auszugleichen.

Bei diesen Korrekturmassen handelt es sich um relativ kleine Mengen und dünnflüssiges Mischgut.

Das in der Fig. 9 dargestellte Mischwerkzeug 19 besitzt einen Mitnehmer 23, in dem der Mitnehmerspalt 24 angeordnet ist. Die Stifte 20, die hier die Mischwalze 4 ersetzen, haben einen Durchmesser von ca. 4 mm.

Sie sind im gleichen Abstand von der Behälterwandung geführt, d.h. es ist der gleiche Quetschspalt vorhanden. Die an sich viel geringere und dünnflüssigere Menge wird ebenfalls auf dem Behälterboden mit bearbeitet und gelangt dann in den Quetschspalt. Bei der Mischwalze nach den Fig. 1 bis 7 ist es ebenfalls wesentlich, dass die Mischwalze praktisch auf dem Behälterboden aufliegt, und zwar auf einer Kreisfläche, so dass das Mischgut gezwungen wird, in den Quetschspalt einzutreten. Bei dem Mischvorgang mit dem Zusatzmischwerkzeug findet praktisch nur ein Vermischen statt. Hier findet der Haupt-Mischvorgang auf dem Becherboden statt.

Figur 8 zeigt einen Mischkopf 21 mit einer Säulenführung 22 dieses Geräts.

## Patentansprüche

1. Gerät zum Knet-Mischen plastischer Masse mit einem die Masse aufnehmenden, drehbar angeordneten Becher (3) und einem in den Becher (3) ein- und ausfahrbaren Mischwerkzeug mit einer angetriebenen Mischwalze (4), die in der Betriebsstellung im Becher (3) exzentrisch angeordnet ist und die unter Ausbildung eines Quetschspalts (8) einen geringen Abstand von einer Behälterwand (14) einnimmt, ferner mit feststehenden Abstreifmessern (5), die in einem Abstand (15) vom Quetschspalt (8) angeordnet sind, dadurch gekennzeichnet, dass an dem Abstreifmesser (5) mindestens ein zur Becherachse hinzeigender Schneidstift (7) angebracht ist, der die sich ablösende Knetmasse in Streifen aufteilt.

2. Gerät nach Anspruch 1, dadurch gekennzeichnet, dass die Mischwalze (4) und der Becher (3) gleichsinnig angetrieben sind.

3. Gerät nach Anspruch 1 oder 2, dadurch gekennzeichnet, dass das Abstreifmesser, an welchem einer oder mehrere übereinanderliegende Schneidstifte (7) starr verankert sind, an der seitlichen Becherinnenfläche gegen deren Drehrichtung gestellt anliegend.

4. Gerät nach einem der Ansprüche 1 bis 3, dadurch gekennzeichnet, dass die Schneidstifte (7) sich im Bereich der sich ablösenden Knetmasse (K) befinden.

5. Gerät nach einem der Ansprüche 1–4, dadurch gekennzeichnet, dass die Schneidstifte (7) gegen die Drehrichtung (17) des Bechers (3) gestellt angeordnet sind.

6. Gerät nach einem der Ansprüche 1 bis 5, dadurch gekennzeichnet, dass das Abstreifmesser (5) gegen die Drehrichtung gestellt angeordnet ist.

7. Gerät nach Anspruch 5, dadurch gekennzeichnet, dass die Schneidstifte (7) mit ca. 5° bis 15° gegen die Drehrichtung (17) gestellt sind.

8. Gerät nach Anspruch 6, dadurch gekennzeichnet, dass das Abstreifmesser (5) mit ca. 5° bis 10° gegen die Drehrichtung (17) gestellt ist.

9. Gerät nach einem der Ansprüche 1 bis 8, dadurch gekennzeichnet, dass ein Zusatz- Mischwerkzeug (19) mit stiftförmigen Mischern vorhanden ist.

10. Gerät nach Anspruch 9, dadurch gekennzeichnet, dass das Zusatz-Mischwerkzeug (19) mehrere Stifte (20) aufweist.

## Claims

1. Appliance for knead-mixing plastic materials comprising a rotatable mounted bucket (3) for receiving said material therein and an in and out of said bucket movable mixing tool having a driven mixing roll (4) which in operating position is placed eccentrical within said bucket (3) and forming a squeeze cap (8) in taking a position leaving little distance between a wall (14) of the vessel and said roll, and further with stationary stripping knifes (5) arranged in a distance (15) from said squeeze cap (8), characterized in that attached to the stripping knife (5) and pointing towards the axis of said bucket at least one cutting pin (7) is provided, splitting up the peeled off material being kneaded into strips.

2. Appliance as claimed in claim 1, characterized in that said mixing roll (4) and said bucket (3) are being driven sinonymous.

3. Appliance as claimed in claim 1 or claim 2, characterized in that said stripping knife, having rigidly anchored to it one or more superposed cutting pins (7), lie against the lateral inner surface of said bucket in a position oriented against the direction of rotation of said surface.

4. Appliance as claimed in claim 1 through 3, characterized in that said cutting pins (7) are positioned within the region of kneaded material (KI) peeling off.

5. Appliance as claimed in claim 1 through 4, characterized in that said cutting pins (7) are in a position oriented against the direction of rotation (17) of said bucket (3).

6. Appliance as claimed in any one of claims 1 through 5, characterized in that said stripping knife (5) is arranged in a position oriented against the direction of rotation.

7. Appliance as claimed in claim 5, characterized in that said cutting pins (7) are oriented in an angle of about 5° to 15° against the direction of rotation (17).

8. Appliance as claimed in claim 6, characterized in that said stripping knife (5) is oriented in an angle of about 5° to 10° against the direction of rotation (17).

9. Appliance as claimed in any one of claims 1 through 8, characterized in that an additional mixing tool (19) is provided having pin-shaped mixing means.

10. Appliance as claimed in claim 9, characterized in that said additional tool (19) is having several pins (20).

## Revendications

1. Dispositif à pétrir et mêler des matières plastiques comportant une coupe (3) rotative et recueillante la masse plastique, ainsi qu'un instrument mélangeur retractable et télescopique dans la coupe (3), muni d'un cylindre mélangeur (4) disposé excentriquement dans la position de travail dans la coupe (3), et occupant une petite distance de la paroi du récipient (14) en formant une fente à presser (8), en outre muni de couteaux à racler (5) disposés à une distance de la fente à presser (8), caractérisé en ce qu'au moins une goupille de coupe (7) orientée vers l'axe de la coupe (3) est montée sur le couteau à racler (5), partageant en bandes la matière plastique se détachant.

2. Dispositif conformément à la revendication 1, caractérisé en ce que le cylindre mélangeur (4) et la coupe (3) sont commandées dans le même sens.

3. Dispositif conformément à la revendication 1 ou 2, caractérisé en ce que le couteau à racler, sur lequel une ou plusieurs goupilles de coupe (7) superposées sont ancrées, est adjacent à la paroi intérieure latérale de la coupe et contre son sens de rotation.

4. Dispositif conformément à une des revendications 1 à 3, caractérisé en ce que les coupilles de coupe se trouvent dans la portée de la masse plastique se détachante.

5. Dispositif conformément à une des revendications 1 à 4, caractérisé en ce que les goupilles de coupe (7) sont disposées et orientées contre le sens de rotation (17) de la coupe (3).

6. Dispositif conformèment à une des revendications 1 à 5, caractérisé en ce que le couteau à racler (5) est disposé et orienté contre le sens de rotation.

7. Dispositif conformément à la revendication 5, caractérisé en ce que les coupilles de coupe (7) sont orientées sous environ 5° jusqu'à 15° contre le sens de rotation (17).

8. Dispositif conformément à la revendication 6, caractérisé en ce que le couteau à racler (5) est orienté sous environ 5° jusqu'à 10° contre le sens de rotation (17).

9. Dispositif conformément à une des revendications 1 à 8, caractérisé en ce qu'un instrument mélangeur additionnel (19) muni de mélangeurs en forme de goupilles est prévue.

10. Dispositif conformément á la revendication 9, caractérisé en ce que l'instrument mélangeur additionnel (19) comporte plusieurs goupilles (20).

FIG 1

FIG 2

FIG 3

FIG 4

FIG 5

*FIG 6*

*FIG 7*

FIG 8

FIG 9